# EUROPEAN PATENT APPLICATION

(11) **EP 2 065 847 A1**
(43) Date of publication of application: **03.06.2009**
(21) Application number: 07023138.6
(22) Date of filing: 29.11.2007
(51) Int. Cl.: G06Q 20/00

(54) **System for processing payment employing off-line transaction approval mode of mobile card and method thereof**

(71) Applicant: Harexinfotech Inc., Seoul 100-272 (KR)
(72) Inventor: Jung, Hoon Joon, Cunpo-city Gyeonggi-do (KR); Yu, Seung Ryol, Seoul (KR); Park, Kyung Yang, Chongno-gu Seoul (KR)
(74) Representative: Vollmann, Heiko

(57) **Abstract**

Provided is a payment processing system and a method thereof employing an off-line transaction approval mode of a mobile card. Card information and off-line transaction approval information is contained in a mobile device such as a cellular phone which us used as a mobile card. A server in a card issuing company computer center registers a Black List (B/L) on a corresponding card of the mobile device through an On-The-Air (OTA) function at the time when a Black List (B/L) item occurs. Accordingly, the mobile device confirms whether or not the card is included in the Black List (B/L) at the time of using the card for transactions. The mobile device communicates with a card reader in a card affiliated shop only when the card can be used for payment of transactions. If the card transaction meets the off-line approval conditions such as an amount of transaction money and the number of times of using the card, the card transaction is approved, and then the transaction detail is stored in the card reader to then transfer the stored transaction detail to the card issuing company in a batch style for exact calculation. Accordingly, a card approval cost and a card approval time can be reduced. The card can be applied in a petty transaction market which made it difficult for the card issuing company to be applied because of an approval cost and time.

## Description

### 1. Field of the Invention

The present invention relates to an approval of payment for transaction using a mobile card, and more particularly to a payment processing system and a method thereof employing an off-line transaction approval mode of a mobile card in which only a corresponding card in a corresponding cellular phone is frozen using a communication function, that is, an Over-The-Air (OTA) function of the cellular phone immediately when the card is regarded as being included in a Black List (B/L), to thereby perform an off-line approval which approves a transaction as a normal transaction if another card is not frozen instead of receiving an on-line approval every time when other cards are used, and then the produced transaction data is processed in batch at a time to thus reduce an approval expense which is consumed for an approval of payment for transaction using the mobile card.

### 2. Description of the Related Art

Recently, as a payment tool, plastic magnetic cards and plastic attachment type IC (Integrated Circuit) cards convenient to use and handy to carry are widely being used in comparison with cash. The cards are classified into a credit card, a check card, a debit card, an advance payment card such as a gift card, and so on according to a payment method.

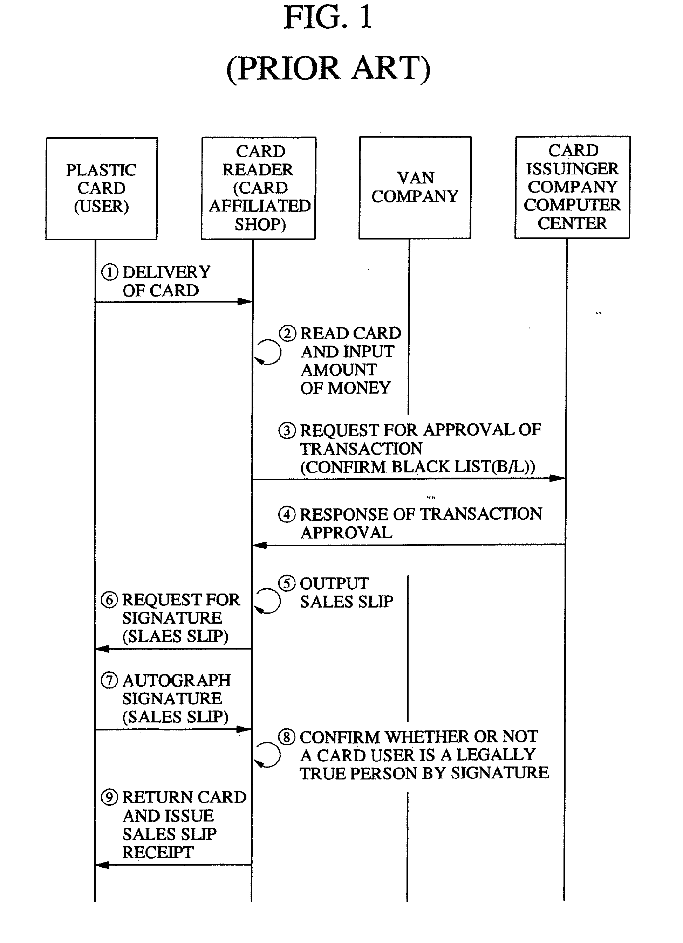

The plastic magnetic cards or the IC attachment type cards should pass through an on-line approval procedure in order to obtain an approval of transactions from a corresponding card issuing company through a card reader in a card affiliated store for all the transactions. This is briefly shown in FIG. 1.

FIG. 1 is a flowchart view showing an existing payment procedure according to an existing on-line transaction approval mode of a plastic (a magnetic strip or IC) card.

In FIG. 1, a customer provides a plastic card for settling a payment to an owner of a card affiliated shop (①). The owner of the card affiliated shop swaps the card which the customer provided into a card reader (MSR) of a card inquiring machine (CAT) or a POS (Point of Sales) system, or reads card information, and inputs the amount of spent money, service charges, etc., and the number of installment months in the case of allotment transactions (②). Next, the card affiliated shop owner requests for an approval of the transaction to a card issuing company (a corresponding card publisher) via a VAN network connected with the card inquiring machine (CAT) or the POS (Point of Sales) system, for the confirmation of the validation of the card, that is, in order to confirm whether the card is included in a Black List (B/L) (③). The computer center in the card issuing company stores and manages all user information about all users' cards belonging to an excess of a payment limit of a card, a lapse of a card valid date, a theft, a loss, and a poor credit, that is, a Black List (B/L), in a server of the card issuing company. The card issuing company computer center confirms whether or not a card of a customer who requested for the approval or disapproval of the transaction is included in the Black List (B/L), and determines an approval or disapproval for use of the corresponding card and responds to the card inquiring machine (CAT) or the POS (Point of Sales) system through which the customer requested for the approval or disapproval of the transaction via a VAN company according to the transaction approval or disapproval determination result (④). If the transaction is approved in the transaction approval request result, the card inquiring machine (CAT) or the POS (Point of Sales) system outputs a transaction detail on a slip of sales together with an approval acknowledgement number (⑤). The owner of the card affiliated shop asks the customer to sign on a signature column of the output slip of sales by an autograph of the customer (⑥). The customer signs his or her autograph on the sales slip and transfers the sales slip to the owner of the card affiliated shop (⑦). Comparing the customer's signature on the sales slip with a signature signed on the back of the card, the owner of the card affiliated shop confirms whether or not the signed person is a legally true person of the card possessor (⑧), and then the owner of the card affiliated shop returns the card to the customer and provides a sheet of a sales slip receipt for the customer (⑨).

The payment using the plastic card must pass through a transaction approval procedure for all transactions on an on-line basis from a card reader in a card affiliated shop to a card issuing company computer center server. For this reason, an approval commission fee of several cents is consumed for each and every case and a time is required for the transaction approval. Accordingly, it is difficult to apply the payment using the plastic card to places where fast payment is required for as in the case of public transportation of subway etc., and petty cash transactions of under ten U.S. dollars.

As a result, there have been disclosed conventional methods of allowing fast payment through an off-line transaction approval mode. As an example, there is a Korean Laid-open patent publication No. 97-2743 on January 28, 1997, entitled "Contactless radio-frequency (RF) recognition credit card system."

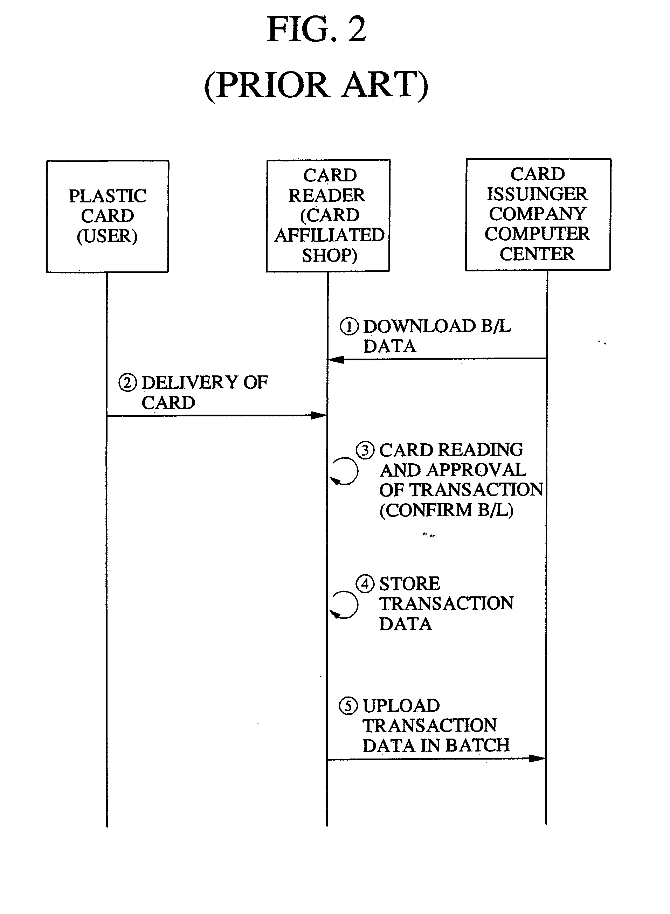

In this conventional technology, a card number is transmitted by radio to a card terminal from a RF card. The card terminal transmits the card number data input from the RF card to a terminal computer that is connected with the card terminal by wire. The terminal computer reads the card number data transmitted from the card terminal and inquires whether or not the card number data is included in a Black List (B/L), to thus determine a transaction approval or disapproval and transmit the determined result. Accordingly, card inquiry time can be reduced to 0.1 seconds or less. Accordingly, the RF card disclosed in the Korean Laid-open patent publication No. 97-2743 can be applied as an advance payment card or a deferred payment card in a transportation fare levy system using a card, in addition to a function of a general credit card. The off-line approval procedure will be briefly illustrated below with reference to FIG. 2.

FIG. 2 is a flowchart view showing an existing payment procedure according to an existing off-line transaction approval mode of a plastic (a magnetic strip or IC) card.

In FIG. 2, a card issuing company computer center transmits Black List (B/L) data to card affiliated shops in order to register cards whose transaction stop reason happens to then make card readers in the card affiliated shops register the Black List (B/L) data (①). The Black List (B/L) data is downloaded and updated everyday or regularly. When a user uses a plastic card for payment (②), the card reader compares card data read by the card reader with the Black List (B/L) data stored in the card reader at an off-line state, and confirms whether or not the read card data is included in the Black List (B/L) to thus perform a transaction approval or disapproval (③). The card reader stores transaction data that occurs after having performed the off-line approval procedure (④). The card reader uploads card transaction data stored in the card reader to the card issuing company computer center in batch everyday or regularly to thereby process exact calculation to settle accounts (⑤).

Using the above-described method achieves fast payment by an off-line transaction approval and can be applied to the public transportations such as subway etc., which does not require for user authentication absolutely. That is, the above-described method enables the user to liquidate public traffic fares with a credit card that the user always carries, to thus greatly improve user's conveniences.

However, Black List (B/L) data should be stored in each and every card reader in card affiliated shops and updated everyday or regularly in order to manage a Black List (B/L). Accordingly, as the number of places which allow cards to be used for payment increases, inefficiencies of the payment system grow. For example, if the number of places which allow cards to be used for payment is one million, Black List (B/L) data should be updated in the one-million places every time when the Black List (B/L) data occurs. As a result, an updating cost becomes remarkably large. Therefore, the above-described off-line transaction approval method is applicable in the particular places such as public transportations but it is difficult to apply the above-described off-line transaction approval method to the general commercial transaction affiliated stores having a lot of places.

Recently, a mobile electronic wallet has been developed in which a mobile device such as a cellular phone which an individual person always carries is used as usage of individual's bankbook, cash card, credit card, check card, membership card, etc. Here, a communication function and a computer function of the mobile device which do not exist in the existing plastic card are grafted together with the existing plastic card. By the representative examples, there are a method of issuing and transferring a card using a communication function, that is, an On-The-Air (OTA) function of the card, a method of controlling a Black List (B/L) of cards, and a method of handling transaction s with no-signature. In this connection, the present applicant discloses a Korean Utility-model Registration No. 276208 on May 8, 2002, entitled "Financial payment card using radio communications and/or ID card issuing and Black List (B/L) processing system" and a Korean Laid-open Patent Publication No. 2006-31156 on April 12, 2006, entitled "Method and system for processing transactions without signing on financial card sales slip for a mobile payment."

### SUMMARY OF THE INVENTION

To solve the above problems of the conventional art, it is an object of the present invention to provide a payment processing system and a method thereof employing an off-line transaction approval mode of a mobile card in which the off-line transaction approval mode allows a transaction approval to be accomplished between a cellular phone and a card reader in a card affiliated shop instead of receiving an approval of a card issuing company server in the case of an amount of money of a standard limit in a mobile card payment system employing a Black List (B/L) control mode utilizing a communication function, that is, an On-The-Air (OTA) function of a card, and then the produced transaction data is processed in a batch style at a time to thus reduce an approval expense and a processing time which are consumed for an approval of payment for transaction using the mobile card.

To accomplish the above object of the present invention, there is provided a payment processing system employing an off-line transaction approval mode of a mobile card, the payment processing system comprising:
a card issuing company computer center which transfers card information containing off-line approval available information to a mobile device which a user who requests for card issuance designates and transfers Black List (B/L) information for stopping card transaction to the mobile device corresponding to a card number that is included in a Black List (B/L);
a mobile device that is used as a mobile card and that receives and stores the card information from the card issuing company computer center, receives the transferred Black List (B/L) information and registers the stored card information in the Black List (B/L), checks whether or not the card information is registered in the Black List (B/L) at the time of settling transactions with the stored card information, and performs a transaction disapproval if it is judged that the card information is included in the Black List (B/L) in the check result and transfers the card information to thus perform a transaction approval if it is not judged that the card information is included in the Black List (B/L) in the check result; and
a card reader in a card affiliated shop which receives the card information through transaction communications with the mobile device that is used as the mobile card, and confirms whether or not an off-line approval is allowed from the transferred card information, to accordingly process a transaction payment according to an on-line approval procedure at the time when the off-line approval is not allowed, and allow the card information to be used at the off-line state to complete the transaction payment at the time when the off-line approval is allowed.

There is also provided a payment processing method employing an off-line transaction approval mode of a mobile card, the payment processing method comprising the steps of:
(a) issuing off-line approval available information at the mobile card issuance time;
(b) transferring and registering a Black List (B/L) to the mobile card using a mobile communication function, that is, an On-The-Air (OTA) function at the time of occurrence of the Black List (B/L) item;
(c) confirming whether or not a corresponding card is registered in the Black List (B/L) when the mobile card is used, and processing the card to be frozen if the card has been registered in the Black List (B/L) according to the confirmation result, and transferring the corresponding card information to the card reader in the card affiliated shop if the card has not been registered in the Black List (B/L) according to the confirmation result;
(d) confirming whether or not an off-line approval is accomplished at the time of receiving the card information, and allowing the card transaction to be approved for a settlement payment according to an on-line approval procedure if the card transaction is not approved at an off-line state in the confirmation result, and allowing the card transaction to be approved for a settlement payment if the card transaction is approved at the off-line state in the confirmation result, to then store the transaction data; and
(e) uploading the stored transaction data by a certain number of cases or at a certain period for the card issuing company in a batch style and processing exact calculation.

### BRIEF DESCRIPTION OF THE DRAWINGS

The above and other objects and advantages of the present invention will become more apparent by describing the preferred embodiment thereof in more detail with reference to the accompanying drawings in which:
FIG. 1 is a flowchart view showing an existing payment procedure according to an existing on-line transaction approval mode of a plastic (a magnetic strip or IC) card;
FIG. 2 is a flowchart view showing an existing payment procedure according to an existing off-line transaction approval mode of a plastic (a magnetic strip or IC) card;
FIG. 3 is a block diagram schematically showing a mobile card payment processing system according to the present invention; and
FIG. 4 is a flowchart for explaining a payment procedure according to an off-line transaction approval mode of the FIG. 3 system.

### DETAILED DESCRIPTION OF THE INVENTION

A payment processing system and a method thereof employing an off-line transaction approval mode of a mobile card according to a preferred embodiment of the present invention will be described with reference to the accompanying drawings.

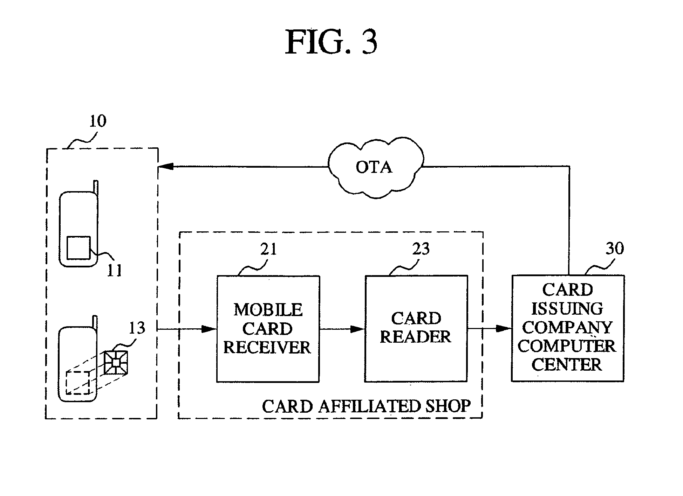

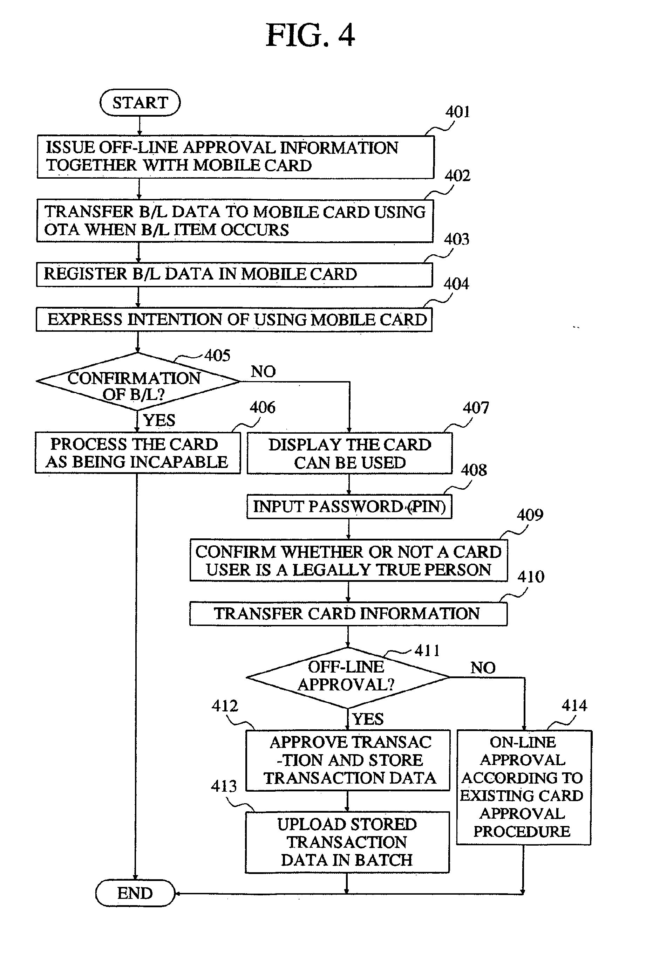

FIG. 3 is a block diagram schematically showing a mobile card payment processing system according to the present invention. The system shown in FIG. 3 includes a mobile card 10 that a card is issued and stored in a mobile device such as a cellular phone. The mobile card 10 contains an electronic wallet function in which banking information of account numbers, card numbers, etc., are stored in a memory 11 or a SIM type IC chip 13 of the mobile device such as a cellular phone. In addition to the electronic wallet function, the mobile card 10 contains off-line approval available information. The off-line approval available information contains an amount of spent money and the number of times of using the card according to an amount of spent money. The FIG. 3 system also includes a mobile card receiver 21 which is installed in a card affiliated shop and receives card information through communications with the mobile card 10, and a card reader 23 which receives the transferred card information and processes a settlement payment to then store a transaction detail. Meanwhile, the FIG. 3 system also includes a card issuing company computer center 30 issues off-line transaction approval available information together with issuance of a card, and transfers a Black List (B/L) to the mobile card 10 when the mobile card 10 is included in the Black List (B/L) to thus register the Black List (B/L) in the mobile card 10. A payment procedure employing an off-line transaction approval mode will be described concretely in the mobile card payment system of FIG. 3 with reference to FIG. 4.

First, a card issuing company stores card information in a memory 11 or a SIM type IC chip 13 of a mobile device such as user name's cellular phone according to user's application and issues a mobile card 11. Here, card issuing company issues off-line approval available information together with the mobile card 11 (step 401). The off-line approval available information contains an amount of spent money and the number of times of using the card according to an amount of spent money, according to an off-line approval mode. For example, the off-line approval transaction amount and number of times of using the card such as 1) less than $50 U.S. dollars and twenty times of using the card in case of a type "A" transaction, 2) less than $10 U.S. dollars and fifty times of using the card in case of a type "B" transaction, and 3) less than $5 U.S. dollars and one-hundred times of using the card in case of a type "C" transaction, or less than $50 U.S. dollars and one-hundred times are tagged and issued. The specific contents regarding the mobile card issuance, are disclosed in a Korean Patent Registration No. 359317 on October 19, 2002 entitled "Card issuance method and system for optical payment system" to the same applicant as this invention.

Meanwhile, the card issuing company computer center 30 transfers Black List (B/L) data to a mobile card 10 using a mobile communication function, that is, an On-The-Air (OTA) function (step 402) and registers the Black List (B/L) in the mobile card 10 (step 403), in the case that a Black List (B/L) item appears, that is, in the case that a customer's robbery or loss report is accepted or the card issuing company investigates and judges that the card is included in the Black List (B/L). That is, the card issuing company computer center 30 communicates by radio with a mobile device such as a cellular phone which is used as a mobile card 10 through a mobile communications network and transmits a Black List (B/L). The mobile device that receives the Black List (B/L) registers the Black List (B/L) directly on the corresponding card data contained in the memory 11 or SIM type IC chip 13 of the mobile device such as a cellular phone. The card issuing company computer center 30 registers a Black List (B/L) in a mobile device containing corresponding card information every time when the Black List (B/L) item occurs.

Then, in the case that a user presses payment buttons on a mobile device such as a cellular phone or a personal digital assistant (PDA) or puts the mobile card 10 on the receiver 21 of the card reader 23, that is, in the case that the user expresses his or her intention of using the mobile card 10 in various kinds of methods (step 404), the mobile device which is used as the mobile card 10 immediately confirms whether or not the Black List (B/L) is included or registered in the mobile device (step 405). If it is not judged that the card information is included in the Black List (B/L), the mobile device displays or informs that the mobile card cannot be used, to then process a card transaction disapproval (step 406). If it is judged that the card information is included in the Black List (B/L), in the confirmation result of step 405, he mobile device displays or informs that the mobile card can be used, to then process a card transaction approval (step 407). Here, the mobile card may be used only after passing through a principal confirmation procedure according to a need, that is, after confirming whether or not a person who uses a card is a legally true person. That is, when the card can be used for payment for transactions, the user inputs a password (PIN) of the card for settlement through the mobile device (step 408), to compare the input password with a password which is previously stored in the mobile device and verify whether or not the input password is the prestored password or check a principal use authentication value using a particular principal authentication mechanism (step 409). If the input password (PIN) is not same as the prestored password at the time of the principal authentication of step 409, re-inputting of another password (PIN) is required for. Then, the re-input password is compared with the prestored password. If the input password is not same as the prestored password as many as a predetermined number of times in the result of comparison, the mobile card 10 is locked not to use the mobile card 10 any more. If the principal authentication is achieved by comparing the input password with the prestored password or checking the principal use authentication value, the card information is transferred (step 410). The mobile device which is used as the mobile card 10 transmits card information to the mobile card receiver 21 in the card affiliated shop using short distance infrared ray (IR) communications or short distance radio frequency (RF) communications, or Bluetooth communications. The mobile card receiver 21 transmits card information to the card reader 23 through communications using a serial or USB, Bluetooth, etc. The card reader 23 in the card affiliated shop recognizes whether or not the mobile card 10 can be used through communications with the mobile device (step 411). The off-line approval confirmation of step 411 is accomplished by checking whether or not an amount of transaction money is not more than an off-line approval amount of money and whether or not the number of times of using the card is left, based on the off-line approval amount of money and the number of times of using the card which are contained in the card information. If the off-line approval is incapable of being allowed in the result of confirmation of step 411, the card transaction is processed according to an existing on-line approval procedure based on the existing card approval procedure (step 414). If the off-line approval is capable of being allowed in the result of confirmation of step 411, the card reader 23 allows a card transaction approval and completes the card transaction, to then store the corresponding transaction data (step 412). After having recognized a normal transaction through communications between the mobile card receiver 21 of the card reader 23 in the card affiliated shop and the mobile card 10, the transaction result is transferred to the mobile card 10, and thus codes corresponding to an amount of transaction money and the number of times of using the card are accumulated to be recorded in the memory 11 or SIM type IC chip 13 of the mobile device such as a cellular phone which is used as the mobile card 10. Accordingly, the number of times of using the off-line approval is controlled to thus control a card transaction limit of a card user. If the number of times of using the off-line approval is not left, the mobile device automatically connects with the server in the card issuing company computer center 30 and requests for initialization of the number of times of using the off-line approval, that is, the number of times of transactions. The server in the card issuing company computer center 30 determines whether or not the number of times of using the off-line approval is initialized according to a financial status of a card user and updates the number of times of using the off-line approval of the mobile card 10 via the On-The-Air (OTA) communications.

The card reader 23 in the card affiliated shop uploads the stored transaction data by a certain number of times of transactions or a certain time to the card issuing company computer center 30 in a batch style, and processes exact calculation (step 413).

As stated above, a payment processing system and a method thereof employing an off-line transaction approval mode of a mobile card according to the present invention uses a Black List (B/L) management method using a communication function, that is, an Over-The-Air (OTA) function of a mobile device. Accordingly, only a corresponding card may be frozen when the card is regarded as being included in the Black List (B/L). Thus, when the payment processing system and a method thereof employing an off-line transaction approval mode of a mobile card according to the present invention is applied to general commercial transactions, it is possible to introduce an off-line transaction approval method. In addition, the present invention determines an amount of money for card transaction and the number of times of using the card according to the kinds of card affiliated shops such as large-scale marts, coffee shops, and vending machines and the number of transaction cases depending upon the financial status of the card user based on the policy of the card issuing company. to thereby provide an effect capable of controlling a card transaction limit of the card user. Using the advantages of the present invention, Black List (B/L) information is directly updated in the card information contained in the cellular phone when a Black List (B/L) item occurs in the case that the present invention is applied to a transaction approval system of card transactions, to thereby make the card frozen. A user can pay for transactions using a mobile card after expression of intention of payment for transactions in a cellular phone. This means that the card issuing company has confirmed that the user card is not included in a Black List (B/L) and can be used within a allowable limit such as an amount of transaction money and the allowable number of times of using the card. When a personal identification (PIN), that is, user's password is input through a cellular phone, a principal authentication value which has been produced in the user's phone or PDA is printed. Accordingly, a signature for user authentication is unnecessary at the time of confirmation whether or not a card user is a legally true person. Further, the present invention does not need to determine whether or not the card is approved for card transaction by connecting from the card reader in the card affiliated shop to the card issuing company server at the time of using the card. Thus, the card reader stores the received mobile card information and the transaction detail as many as predetermined cases or for a predetermined period, and sends collected cases of 'n' to the card issuing company to thereby request the card issuing company to process exact calculation for the 'n' collected cases. In this case, the transaction approval cost is reduced into 1/N of the approval cost of the maximum transaction cases in view of the card issuing company. For this reason, using the present invention, the card can be extensively used for petty transactions which have not been proper for card transactions since the card approval cost is considerably excessive.

As described above, the present invention provides a card transaction approval system appropriate for petty transactions, to thereby provide consumers with an advantage of allowing the consumers to use the card quickly, conveniently and safely for all kinds of transactions and places such as public transportations and small and large amount of sums of general commercial transactions, and thereby provide card affiliated shops with an effect of reducing a card transaction approval processing time and a signing time in view of the card affiliated shops, to thus reduce a standby time of customers and provides the customers with a convenient and quick payment environment, and to thereby reduce a counter or cashier affair to obtain a cost-down effect. As described above, the present invention has been described with respect to particularly preferred embodiments. However, the present invention is not limited to the above embodiments, and it is possible for one who has an ordinary skill in the art to make various modifications and variations, without departing off the spirit of the present invention

## Claims

1. A payment processing system employing an off-line transaction approval mode of a mobile card, the payment processing system comprising:
a card issuing company computer center which transfers card information containing off-line approval available information to a mobile device which a user who requests for card issuance designates and transfers Black List (B/L) information for stopping card transaction to the mobile device corresponding to a card number that is included in a Black List (B/L);
a mobile device that is used as a mobile card and that receives and stores the card information from the card issuing company computer center, receives the transferred Black List (B/L) information and registers the stored card information in the Black List (B/L), checks whether or not the card information is registered in the Black List (B/L) at the time of settling transactions with the stored card information, and performs a transaction disapproval if it is judged that the card information is included in the Black List (B/L) in the check result and transfers the card information to thus perform a transaction approval if it is not judged that the card information is included in the Black List (B/L) in the check result; and
a card reader in a card affiliated shop which receives the card information through transaction communications with the mobile device that is used as the mobile card, and confirms whether or not an off-line approval is allowed from the transferred card information, to accordingly process a transaction payment according to an on-line approval procedure at the time when the off-line approval is not allowed, and allow the card information to be used at the off-line state to complete the transaction payment at the time when the off-line approval is allowed.

2. The payment processing system according to claim 1, wherein the off-line approval information comprises a certain amount of money and the number of times of using the card by the kinds of card affiliated shops and the number of transaction cases according to a financial status of a card user.

3. The payment processing system according to claim 1, wherein the mobile device displays states regarding whether or not the card is allowed to be used according to a result of checking whether or not the card is included in the Black List (B/L), and passes through a principal authentication procedure according to a need at the time when the card can be used to then transfer the card information to the card reader.

4. The payment processing system according to claim 3, wherein the mobile device receives an input password of the card and compares the input password with a prestored password to thus confirm whether or not the card user is a legally true person.

5. The payment processing system according to claim 1, wherein the card reader comprises a mobile card receiver which receives card information from the mobile device, to thus check whether or not an amount of transaction money is not more than an off-line approval amount of money and whether or not the number of times of using the card is left, and to thereby confirm whether or not an off-line approval can be accomplished.

6. The payment processing system according to claim 5, wherein the mobile device controls the number of times of using the off-line approval at the time of completion of transactions by the off-line approval of the card reader, in which if the number of times of using the off-line approval is not left, the mobile device automatically connects with the card issuing company computer center and requests for initialization of the number of times of using the off-line approval, that is, the number of times of transactions, and the card issuing company computer center determines whether or not the number of times of using the off-line approval is initialized according to a financial status of the card user and updates the number of times of using the off-line approval of the mobile card.

7. The payment processing system according to claim 1, wherein the card reader stores transaction data, and uploads the stored transaction data in a batch style to the card issuing company computer center, to thus perform exact calculation.

8. A payment processing method employing an off-line transaction approval mode of a mobile card, the payment processing method comprising the steps of:
(a) issuing off-line approval available information at the mobile card issuance time;
(b) transferring and registering a Black List (B/L) to the mobile card using a mobile communication function, that is, an On-The-Air (OTA) function at the time of occurrence of the Black List (B/L) item;
(c) confirming whether or not a corresponding card is registered in the Black List (B/L) when the mobile card is used, and processing the card to be frozen if the card has been registered in the Black List (B/L) according to the confirmation result, and transferring the corresponding card information to the card reader in the card affiliated shop if the card has not been registered in the Black List (B/L) according to the confirmation result;
(d) confirming whether or not an off-line approval is accomplished at the time of receiving the card information, and allowing the card transaction to be approved for a settlement payment according to an on-line approval procedure if the card transaction is not approved at an off-line state in the confirmation result, and allowing the card transaction to be approved for a settlement payment if the card transaction is approved at the off-line state in the confirmation result, to then store the transaction data; and
(e) uploading the stored transaction data by a certain number of cases or at a certain period for the card issuing company in a batch style and processing exact calculation.

9. The payment processing method according to claim 8, wherein the step (c) further comprises the sub-steps of receiving a password (PIN) and confirming whether or not the card user is a legally true person before transferring the card information.

10. The payment processing method according to claim 8, wherein the step (d) comprises the sub-steps of: (d1) checking whether or not an amount of transaction money is not more than an off-line approval amount of money and whether or not the number of times of using the card is left, based on the off-line approval information which is contained in the card information; (d2) if the off-line approval is capable of being allowed, allowing a card transaction approval to then complete the card transaction and store the corresponding transaction data; and (d3) controlling the number of times of using the off-line approval which is allowed for the mobile card every time of completion of transactions through the off-line approval of the card reader, in which if the number of times of using the off-line approval is not left, the mobile device automatically connects with the card issuing company computer center and requests for initialization of the number of times of using the off-line approval, that is, the number of times of transactions.
